# EUROPEAN PATENT APPLICATION

(11) **EP 4 322 055 A1**
(43) Date of publication of application: **14.02.2024**
(21) Application number: 22783804.2
(22) Date of filing: 23.02.2022
(51) Int. Cl.: G06K 9/62

(54) **METHOD AND APPARATUS FOR FUSING TRAFFIC MARKINGS, AND STORAGE MEDIUM AND ELECTRONIC DEVICE**

(30) Priority: 06.04.2021 CN 202110369281
(71) Applicant: Beijing CHJ Information Technology Co., Ltd., Beijing 101399 (CN)
(72) Inventor: ZHU, Zhen, Beijing 101399 (CN); WU, Wei, Beijing 101399 (CN); XIONG, Chao, Beijing 101399 (CN)
(74) Representative: Maiwald GmbH
(86) International application number: PCT/CN2022/077532
(87) International publication number: WO 2022/213734

(57) **Abstract**

The present disclosure relates to a method and apparatus for fusing traffic markings, and a storage medium and an electronic device, and same are used for improving the fusion efficiency of traffic markings. The method comprises: acquiring, from a target marking set, a first local portion that coincides with a marking set to be fused, and acquiring, from the marking set to be fused, a second local portion that coincides with the target marking set; according to a target transformation relationship, generating a first transformed marking set obtained by means of transforming the first local portion, and a second transformed marking set obtained by means of transforming the second local portion; determining a first translation parameter that can fuse the second transformed marking set and the first transformed marking set; according to the target transformation relationship, reversely deriving a second translation parameter by using the first translation parameter; and moving, by using the second translation parameter, the marking set to be fused.

## Description

### CROSS-REFERENCE TO RELATED APPLICATIONS

This application is based on and claims priority to Chinese patent application NO. 202110369281.8, filed on April 06, 2021, the entire contents of which are incorporated herein by reference.

### TECHNICAL FIELD

The present disclosure relates to a field of computer technology, and particularly to a method and an apparatus for fusing traffic markings, a storage medium, and an electronic device.

### BACKGROUND

In a crowd-sourced fusion scenario of high-precision data, when traffic marking data is collected (for example, linear data is collected by using environmental perception technologies such as an image perception technology and a laser perception technology), since data is collected frame by frame, data collected between the frames may not be completely fitted, resulting in a misalignment phenomenon after the linear data of different frames is combined. At present, misaligned linear data is generally fused in a linear fusion method. In the linear fusion method, it is necessary to calculate the homonymous point pairs and adopt a square difference method, which requires a large amount of calculation. Especially when a processing object is crowd-sourced lane line data, a calculation amount is significantly increased, and an adjustment efficiency is extremely low.

### SUMMARY

A purpose of the present disclosure is to provide a method and apparatus for fusing traffic markings, a storage medium and an electronic device, to improve a fusion efficiency of traffic markings.

According to a first aspect of embodiment of the present disclosure, a method for fusing traffic markings is provided. The method includes:
obtaining a first local part overlapped with a marking set to be fused from a target marking set and a second local part overlapped with the target marking set from the marking set to be fused;
based on a target transformation relationship, generating a first transformed marking set transformed from the first local part and a second transformed marking set transformed from the second local part;
determining a first translation parameter capable of fusing the second transformed marking set with the first transformed marking set;
backcasting a second translation parameter by using the first translation parameter based on the target transformation relationship; and
moving the marking set to be fused by using the second translation parameter.

Optionally, the method further includes:
for a given target marking set, determining the marking set to be fused corresponding to the target marking set, in which the target marking set and the marking set to be fused are both taken from marking sets of road data, and each marking set includes a group of the traffic markings.

Optionally, determining the marking set to be fused corresponding to the target marking set includes:
based on an area occupied by the target marking set, determining a marking set whose occupied area overlaps with the area occupied by the target marking set from the road data as the marking set to be fused.

Optionally, before obtaining the first local part overlapped with the marking set to be fused from the target marking set and the second local part overlapped with the target marking set from the marking set to be fused, the method further includes:
determining a first number of the traffic markings in the target marking set and a second number of the traffic markings in the marking set to be fused;
in response to the first number being inconsistent with the second number, determining a smaller one of the first number and the second number as a target number; and
deleting a traffic marking from the target marking set or the marking set to be fused, to enable a number of the traffic markings in the target marking set and a number of the traffic markings in the marking set to be fused to be the target number.

Optionally, deleting the traffic marking from the target marking set or the marking set to be fused, to enable the number of the traffic markings in the target marking set and the number of the traffic markings in the marking set to be fused to be the target number includes:
determining a first distance between a traffic marking at a first side edge of the target marking set and a traffic marking at the first side edge of the marking set to be fused;
determining a second distance between a traffic marking at a second side edge of the target marking set and a traffic marking at the second side edge of the marking set to be fused;
taking one side corresponding to a larger one of the first distance and the second distance as a target side; and
deleting the traffic marking at the target side from the target marking set or the marking set to be fused.

Optionally, deleting the traffic marking at the target side from the target marking set or the marking set to be fused includes:
in response to the first number being greater than the second number, deleting a specified number of the traffic markings at the target side from the target marking set; and
in response to the second number being greater than the first number, deleting a specified number of the traffic markings at the target side from the marking set to be fused;
in which the specified number is a difference between the first number and the second number.

Optionally, the target transformation relationship enables the second local part after transformation to be perpendicular to a specified coordinate axis.

Optionally, the target transformation relationship is obtained by an affine transformation.

Optionally, determining the first translation parameter capable of fusing the second transformed marking set with the first transformed marking set includes:
determining a first bounding rectangle corresponding to the first transformed marking set; and
performing a plurality of translation operations on the second transformed marking set, recording an intersection area of a second bounding rectangle corresponding to the second transformed marking set and the first bounding rectangle in each translation, and taking a translation parameter corresponding to a translation with a maximum intersection area as the first translation parameter.

Optionally, performing the plurality of translation operations on the second transformed marking set, recording the intersection area of the second bounding rectangle corresponding to the second transformed marking set and the first bounding rectangle in each translation, and taking the translation parameter corresponding to the translation with the maximum intersection area as the first translation parameter includes:
recording an initial position of the second transformed marking set without being subject to any translation, and determining the intersection area of the second bounding rectangle corresponding to the second transformed marking set at the initial position and the first bounding rectangle as an initial intersection area;
translating the second transformed marking set in a specified direction by a specified distance, to make the second transformed marking set reach a target position of this translation;
determining the intersection area of the second bounding rectangle corresponding to the second transformed marking set at the target position and the first bounding rectangle as a target intersection area;
comparing the target intersection area with a reference intersection area;
in response to the target intersection area being less than the reference intersection area, stopping translating the second transformed marking set in the specified direction; and
after a translation operation on the second transformed marking set is stopped, taking the translation parameter of an intermediate position relative to the initial position as the first translation parameter, in which the intersection area of the second bounding rectangle corresponding to the second transformed marking set at the intermediate position and the first bounding is maximum in a historical translation process.

Optionally, the method further includes:
in response to the target intersection area being larger than the reference intersection area, returning to the step of translating the second transformed marking set in the specified direction by the specified distance, to make the second transformed marking set reach the target position of this translation.

Optionally, the specified direction is a direction parallel to a specified coordinate axis, and the specified direction includes a first direction and a second direction which are opposite to each other.

Optionally, the traffic markings are lane lines.

According to a second aspect of the embodiment of the present disclosure, an apparatus for fusing traffic markings is provided. The apparatus includes:
a first obtaining module, configured to obtain a first local part overlapped with a marking set to be fused from a target marking set and a second local part overlapped with the target marking set from the marking set to be fused;
a generating module, configured to, based on a target transformation relationship, generate a first transformed marking set transformed from the first local part and a second transformed marking set transformed from the second local part;
a first determining module, configured to determine a first translation parameter capable of fusing the second transformed marking set with the first transformed marking set;
a derivation module, configured to backcast a second translation parameter by using the first translation parameter based on the target transformation relationship; and
a moving module, configured to move the marking set to be fused by using the second translation parameter.

Optionally, the apparatus further includes:
a second determining module, configured to for a given target marking set, determine the marking set to be fused corresponding to the target marking set. The target marking set and the marking set to be fused are both taken from marking sets of road data, and each marking set includes a group of the traffic markings.

Optionally, the second determining module is configured to determine a marking set whose occupied area overlaps with an area occupied by the target marking set based on the area occupied by the target marking set from the road data as the marking set to be fused.

Optionally, the apparatus further includes:
a second obtaining module, configured to determine a first number of the target markings in the target marking set and a second number of the target markings in the marking set to be fused, before obtaining the first local part overlapped with the marking set to be fused from the target marking set and the second local part overlapped with the target marking set from the marking set to be fused;
a third determining module, configured to determine a smaller one of the first number and the second number as a target number, in response the first number being inconsistent with the second number;
a deleting module, configured to delete a traffic marking from the target marking set or the marking set to be fused, to enable a number of the traffic markings in the target marking set and a number of the traffic markings in the marking set to be fused to be the target number.

Optionally, the deleting module includes:
a first determining submodule, configured to determine a first distance between a traffic marking at a first side edge of the target marking set and a traffic marking at the first side edge of the marking set to be fused;
a second determining submodule, configured to determine a second distance between a traffic marking at a second side edge of the target marking set and a traffic marking at the second side edge of the marking set to be fused;
a third determining submodule, configured to take one side corresponding to a larger one of the first distance and the second distance as a target side;
a deleting submodule, configured to delete the traffic marking at the target side from the target marking set or the marking set to be fused.

Optionally, the deleting submodule is configured to:
in response to the first number being greater than the second number, delete a specified number of the traffic markings at the target side from the target marking set; and
in response to the second number being greater than the first number, delete a specified number of the traffic markings at the target side from the marking set to be fused;
in which the specified number is a difference between the first number and the second number.

Optionally, the target transformation relationship enables the second local part after transformation to be perpendicular to a specified coordinate axis.

Optionally, the target transformation relationship is obtained through an affine transformation.

Optionally, the first determining module includes:
a fourth determining submodule, configured to determine a first bounding rectangle corresponding to the first transformed marking set; and
a fifth determining submodule, configured to perform a plurality of translation operations on the second transformed marking set, record the intersection area of a second bounding rectangle corresponding to the second transformed marking set and the first bounding rectangle in each translation, and take a translation parameter corresponding to a translation with a maximum intersection area as the first translation parameter.

Optionally, the fifth determining submodule is configured to:
record an initial position of the second transformed marking set without being subject to any translation, and determine the intersection area of the second bounding rectangle corresponding to the second transformed marking set at the initial position and the first bounding rectangle as an initial intersection area;
translate the second transformed marking set in a specified direction by a specified distance, to make the second transformed marking set reach a target position of this translation;
determine the intersection area of the second bounding rectangle corresponding to the second transformed marking set at the target position and the first bounding rectangle as a target intersection area;
compare the target intersection area with a reference intersection area;
if the target intersection area is less than the reference intersection area, stop translating the second transformed marking set in the specified direction;
after a translation operation on the second transformed marking set is stopped, take a translation parameter of an intermediate position relative to the initial position as the first translation parameter, in which the intersection area of the second bounding rectangle corresponding to the second transformed marking set at the intermediate position and the first bounding rectangle is maximum in a historical translation process.

Optionally, the fifth determining submodule is configured to:
return to the step of translating the second transformed marking set in a specified direction by a specified distance, to make the second transformed marking set reach a target position of this translation, in response to the target intersection area being larger than the reference intersection area.

Optionally, the specified direction is a direction parallel to the specified coordinate axis, and the specified direction includes a first direction and a second direction are opposite to each other.

Optionally, traffic markings are lane lines.

According to a third aspect of the embodiment of the present disclosure, a computer readable storage medium is provided, having a computer program stored thereon, when the program is executed by a processor, the steps of the method according to the first aspect of the present disclosure are implemented.

According to a fourth aspect of the embodiment of the present disclosure, an electronic device is provided, including:
a memory with computer program stored thereon; and
a processor, configured to execute the computer program in the memory to implement the steps of the method according to the first aspect of the present disclosure.

According to the technical solution, a first local part overlapped with a marking set to be fused is obtained from a target marking set, and a second local part overlapped with the target marking set is obtained from the marking set to be fused. Based on a target transformation relationship, a first transformed marking set is obtained after transformation of the first local part, and a second transformed marking set is obtained after transformation of the second local part. A first translation parameter capable of fusing the second transformed marking set with the first transformed marking set is determined. A second translation parameter is backcasted by using the first translation parameter based on the target transformation relationship. The marking set to be fused is moved by using the second translation parameter. In this way, in a process of fusing the traffic markings, only a simple calculation mode needs to be used, which is beneficial to improve a fusion efficiency and accuracy.

Other features and advantages of the present disclosure will be described in detail in the following detailed description.

### BRIEF DESCRIPTION OF THE DRAWINGS

The accompanying drawings, which constitute a part of this specification, are provided for better understanding of the present disclosure, and serve to explain the present disclosure together with the following embodiments, which shall not be construed to limit the present disclosure.
FIG. 1 is a flowchart of a method for fusing traffic markings according to an embodiment of the present disclosure;
FIG. 2 is a flowchart of a method for fusing traffic markings according to another embodiment of the present disclosure;
FIG. 3A is an example schematic diagram illustrating a target marking set and a marking set to be fused in the method for fusing traffic markings according to the present disclosure;
FIG. 3B is an example schematic diagram illustrating a target marking set and a marking set to be fused in the method for fusing traffic markings according to the present disclosure;
FIG. 3C to FIG. 3F are example schematic diagrams illustrating a process of determining a first translation parameter in the method for fusing traffic markings provided in the present disclosure;
FIG. 4 is a block diagram of an apparatus for fusing traffic markings according to an embodiment of the present disclosure;
FIG. 5 is a block diagram illustrating an electronic device according to an example embodiment.

### DETAILED DESCRIPTION

Embodiments of the present disclosure will be described in detail below with reference to the accompanying drawings. It should be understood that the embodiments described herein are merely intended to illustrate and explain the present disclosure, but shall not be construed to limit the present disclosure.

Traffic markings are also road traffic markings, which refer to identifiers for indicating traffic information such as guidance, restriction, warning and the like to traffic participants by lines, arrows, characters, facade marks, protruding road signs, contour marks and the like on a road surface of a road. Although the traffic markings are stationary, as set forth in the background, in a process of collecting road data, frame-by-frame collection is performed by using an existing data collection mode (for example, an image collection mode and a laser collection mode). Due to a viewing angle difference between frames, there may be a deviation in collections for a same group of the traffic markings. That is to say, a misalignment may occur at the connection of the same group of the traffic markings. Therefore, for this situation, the traffic markings with the misalignment need to be fused. At present, a common fusion mode in the related art is to perform a geometric adjustment based on an adjustment principle. In an adjustment process, multi-source data is classified into an "adjustment graph" and a "reference graph", and then a coordinate displacement equation is established based on pairs of matching points having a correspondence in the "adjustment graph" and "reference graph". In order to calculate a geometric adjustment amount, the coordinate displacement equation and a shape equation generally need to be designed, and coordinate values are solved by adopting a constrained least square method. However, the above method requires a large amount of calculation and has a low adjustment efficiency.

In order to solve the above problems, a method and apparatus for fusing the traffic markings, a storage medium, and an electronic device are provided in the present disclosure, so as to improve a fusion efficiency of the traffic markings.

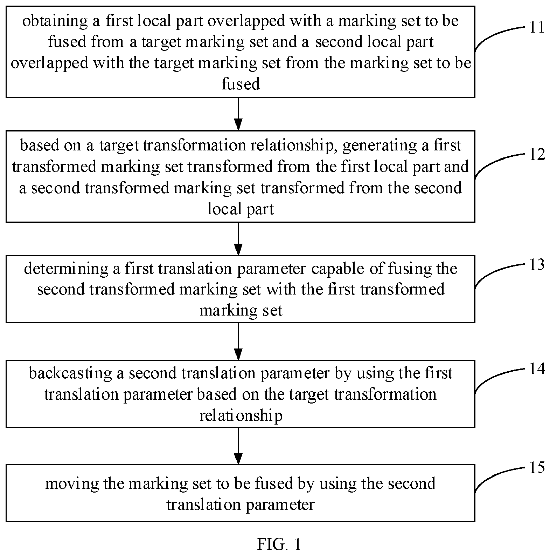

FIG. 1 is a flowchart of a method for fusing traffic markings according to the embodiment of the present disclosure. As shown in FIG. 1, the method may include following steps 11 to 15.

At step 11, a first local part overlapped with a marking set to be fused is obtained from a target marking set, and a second local part overlapped with the target marking set is obtained from the marking set to be fused.

At step 12, based on a target transformation relationship, a first transformed marking set is obtained after transformation of the first local part and a second transformed marking set is obtained after transformation of the second local part.

At step 13, a first translation parameter capable of fusing the second transformed marking set and the first transformed marking set is determined.

At step 14, a second translation parameter is backcasted by using the first translation parameter based on the target transformation relationship.

At step 15, the marking set to be fused is moved using the second translation parameter.

The method provided in the present disclosure is used for realizing a fusion of traffic markings in the target marking set and the marking set to be fused. Therefore, before the step 11 is executed, the marking set to be fused corresponding to the target marking set needs to be determined for a given target marking set.

The target marking set and the marking set to be fused are both taken from marking sets of road data, and each marking set includes a group of traffic markings. The road data is data related to a road that can be collected in a data collection process, and the road data includes a marking set composed of a group of traffic markings. Here, the group of traffic markings may be considered to be several traffic markings with similar positions, for example, the traffic markings of a same lane, or the traffic markings of a same road, etc. For example, traffic markings may be lane lines. For another example, traffic markings may be crosswalk lines.

As described in the background, a case where a same marking set has a misalignment is usually derived from collections of different frames. Therefore, the two frames for which the collected road data is fused may be specified in the present disclosure. For example, in an image collection mode, two frames of images collected in turn may be used as processing objects of a fusion operation.

In a possible implementation, the marking set to be fused corresponding to the target marking set may be determined by the following steps.

Based on an area occupied by the target marking set, a marking set whose occupied area overlaps with the area occupied by the target marking set is determined from the road data as the marking set to be fused.

In general, it is considered that a misalignment phenomenon only occurs to the traffic markings corresponding to the same road or the same lane, and the misalignment can cause the areas occupied by the markings to be partially overlapped. On the basis of the above, the marking set to be fused corresponding to the target marking set can be identified. That is, based on a position where the target marking set is located, the marking set in the road data that overlaps with the area of the target marking set is determined, and the determined marking set is determined as the marking set to be fused.

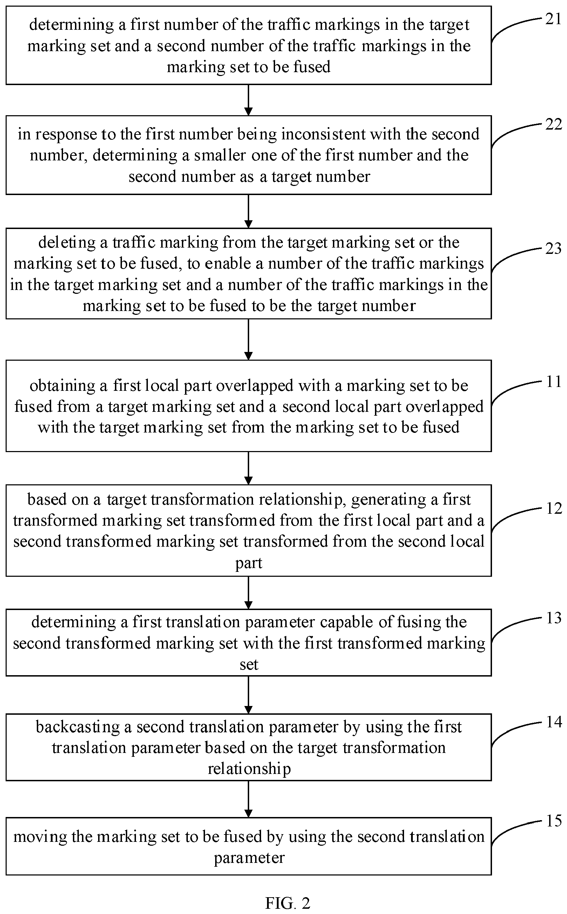

Optionally, in some cases, there may be a phenomenon that the number of the traffic markings of the target marking set is inconsistent with the number of the traffic markings of the marking set to be fused. In this case, if a subsequent processing is directly performed, a data processing error may be caused due to inconsistency of the numbers of the traffic markings, or even the fusion fails. Therefore, in a possible implementation, before the step 11 is executed, on the basis of steps shown in FIG. 1, the method provided in the present disclosure may further include the following steps, for example, steps 21 to 23, as shown in FIG. 2.

At step 21, a first number of traffic markings in the target marking set and a second number of traffic markings in the marking set to be fused are obtained.

At step 22, if the first number is inconsistent with the second number, a smaller one of the first number and the second number is determined as the target number.

At step 23, a traffic marking is deleted from the target marking set or the marking set to be fused, so that the number of the traffic markings in the target marking set and the number of the traffic markings in the marking set to be fused are both the target number.

In general, if the number of traffic markings in the target marking set is inconsistent with the number of traffic markings in the marking set to be fused, consistency of numbers of traffic markings in the two index line sets can be realized by deleting one or more markings from the set with a larger number or adding one or more target markings to the set with a less number. However, problems of slow data processing speed, accuracy reduction, etc., are easily caused by adding the traffic marking in a processing scenario of the present solution. Therefore, a manner of deleting a traffic marking is usually adopted.

For example, the step 23 may include the following steps:
determining a first distance between a traffic marking at a first side edge of the target marking set and a traffic marking at the first side edge of the marking set to be fused;
determining a second distance between a traffic marking at a second side edge of the target marking set and a traffic marking at the second side edge of the marking set to be fused;
taking one side corresponding to a larger one of the first distance and the second distance as a target side;
deleting the traffic marking at the target side from the target marking set or the marking set to be fused.

If the first number is greater than the second number, a specified number of the traffic markings at the target side are deleted from the target marking set. If the second number is greater than the first number, the specified number of the traffic markings at the target side are deleted from the marking set to be fused. The specified number is a difference between the first number and the second number.

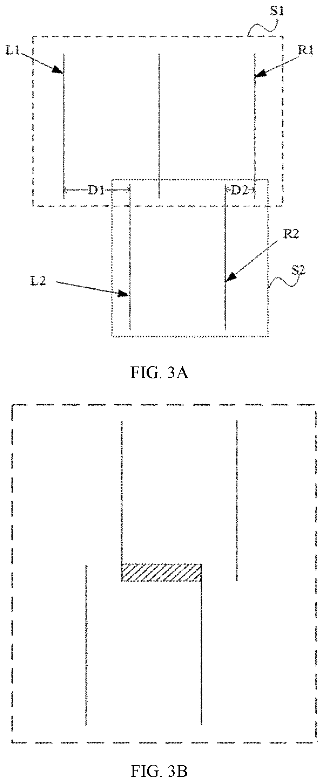

For the marking set shown in FIG. 3A, the first side and the second side may respectively refer to a left side and a right side (sequential order is infinite). In FIG. 3A, there are a target marking set S 1 and a marking set to be fused S2. The target marking set S 1 includes 3 traffic markings, the marking set to be fused S2 includes 2 traffic markings, and the numbers of the traffic markings in the two sets are inconsistent. Therefore, according to the above steps, a distance D1 between a traffic marking L1 in the target marking set S1 and a traffic marking L2 in the marking set to be fused S2 should be determined. A distance D2 between a traffic marking R1 in the target marking set S 1 and a traffic marking R2 in the marking set to be fused S2 should be determined. If D1 is greater than D2, the target side is the left side, L1 is deleted (the specified number is the difference 1 between 3 and 2). If D1 is less than D2, then R1 is deleted. Optionally, if D2 is equal to D2, any side may be selected as the target side for deletion.

In this way, the target marking set and the marking set to be fused are preprocessed, so that the numbers of the traffic markings contained in the two sets are the same, which facilitates improving subsequent data processing efficiency and a processing accuracy.

Referring to FIG. 1, at the step 11, the first local part overlapped with the marking set to be fused is obtained from the target marking set, and the second local part overlapped with the target marking set is obtained from the marking set to be fused.

A local marking set, i.e., the first local part, corresponding to an intersection part may be obtained from the target marking set based on an overlapped area of the target marking set and the marking set to be fused. Similarly, the local marking set, i.e., the second local part, corresponding to the intersection part is obtained from the marking set to be fused. In FIG. 3B, there are two marking sets, i.e., the upper and lower index line sets. Assuming that the upper index line set is the target marking set, the lower index line set is the marking set to be fused. Arectangular shadow region in a dashed box in the figure is the overlapped area where the target marking set and the marking set to be fused are overlapped with each other. Based on the shadow region, a portion of the target marking set falling in the shadow region is the first local part, and a portion of the marking set to be fused falling in the shadow region is the second local part.

At the step 12, based on the target transformation relationship, the first transformed marking set is obtained after transformation of the first local part, and the second transformed marking set is obtained after transformation of the second local part.

The target transformation relationship enables the second local part after transformation to be perpendicular to a specified coordinate axis. The specified coordinate axis is a horizontal axis or a vertical axis in a preset plane rectangular coordinate system. The preset plane rectangular coordinate system is constructed according to the earth coordinate system, for example, the horizontal axis and vertical axis are constructed with reference to latitude and longitude.

For example, the target transformation relationship may be determined by an affine transformation. Converting a pattern to a desired position by means of the affine transformation is common general knowledge in the related art, and details are not described herein.

After the target transformation relationship is obtained, the first transformed marking set may be generated by performing a transformation on the first local part based on the target transformation relationship. The second transformed marking set by performing a transformation performed on the second local part based on the target transformation relationship.

The target transformation relationship can make the second local part after transformation perpendicular to the specified coordinate axis (the horizontal axis or the vertical axis in the preset plane rectangular coordinate system). Therefore, after the second local part is transformed based on the target transformation relationship, the second local part can be perpendicular to the specified coordinate axis. In this way, in a subsequent translation process, it is only required to perform a translation in a specified coordinate axis direction, to obtain an optimal solution capable of fusing the two marking set.

At the step 13, the first translation parameter capable of fusing the second transformed marking set with the first transformed marking set is determined.

In a possible implementation, the step 13 may include the following steps:
determining a first bounding rectangle corresponding to the first transformed marking set; and
performing a plurality of translation operations on the second transformed marking set, recording an intersection area of a second bounding rectangle corresponding to the second transformed marking set and the first bounding rectangle in each translation, and taking a translation parameter corresponding to a translation with a maximum intersection area as the first translation parameter.

The first bounding rectangle and the second bounding rectangle are both the minimum bounding rectangles of the patterns. The minimum bounding rectangle is a minimum bounding rectangle surrounding a primitive (abbreviation of a basic graphic element), with two adjacent edges being respectively parallel to the horizontal axis and the vertical axis. Correspondingly, the first bounding rectangle is the minimum bounding rectangle surrounding the first transformed marking set and with two adjacent edges being respectively parallel to the horizontal axis and the vertical axis in the preset plane rectangular coordinate system. The second bounding rectangle is the minimum bounding rectangle surrounding the second transformed marking set and with two adjacent edges being respectively parallel to the horizontal axis and the vertical axis in the preset plane rectangular coordinate system.

Optionally, performing the plurality of translation operations on the second transformed marking set, recording the intersection area of a second bounding rectangle corresponding to the second transformed marking set and the first bounding rectangle in each translation, and taking a translation parameter corresponding to a translation with a maximum intersection area as the first translation parameter may include following first to sixth steps.

In a first step, an initial position of the second transformed marking set without being subject to any translation is recorded, and an intersection area of the second bounding rectangle corresponding to the second transformed marking set at the initial position and the first bounding rectangle is determined as an initial intersection area.

In a second step, the second transformed marking set is translated in a specified direction by a specified distance, so that the second transformed marking set reaches a target position of this translation.

In a third step, the intersection area of the second bounding rectangle corresponding to the second transformed marking set at the target position and the first bounding rectangle is determined as a target intersection area.

In a fourth step, the target intersection area is compared with a reference intersection area.

The reference intersection area is determined in the translation process of translating in the specified direction, which is the intersection area of the second bounding rectangle of the second transformed marking set before being subject to this translation and the first bounding rectangle. The reference intersection area is the initial intersection area under an initial condition.

If the target intersection area is less than the reference intersection area, a fifth step is performed.

In the fifth step, translating the second transformed marking set in the specified direction is stopped.

In the sixth step, after a translation operation on the second transformed marking set is stopped, the translation parameter of an intermediate position relative to the initial position is used as the first translation parameter, the intersection area of the second bounding rectangle corresponding to the second transformed marking set at the intermediate position and the first bounding rectangle is maximum in a historical translation process.

If the target intersection area is larger than the reference intersection area after comparing the target intersection area with the reference intersection area in the above fourth step, the second step is returned. The second step and its subsequent steps are performed again. That is, a translation operation is performed and the intersection area is calculated again, and the intersection area is compared with a new reference intersection area again. It is judged whether it is necessary to recycle the translation process once again based on a comparison result until it is determined that the fifth step can be performed.

The specified direction is a direction parallel to the specified coordinate axis, and the specified direction includes a first direction and a second direction which are opposite to each other.

That is, the second transformed marking set may be translated in the first direction by the specified distance based on the initial position of the second transformed marking set, and the target intersection area corresponding to this translation is calculated, when the second transformed marking set is moved to attempt to find a most appropriate first translation parameter. If the target intersection area corresponding to this translation is increased compared to the target intersection area of a previous translation, the second transformed marking set is continued to be moved in the first direction based on the target position reached by this translation. If the target intersection area corresponding to this translation is reduced compared to the target intersection area of the previous translation, the second transformed marking set is stopped to be translated in the first direction. The translation processing mode in the second direction is the same as that in the first direction, and details are not described herein. It should be noted that, regardless whether the translation is performed in the first direction or in the second direction, the second transformed marking set is located at the initial position in the first step. Translation operations in the first direction and in the second direction are independent of each other and do not affect each other, and the translation operations in the first direction and in the second direction are not limited in a strict sequence.

Until translations in the first direction and the second direction are both stopped, a series of intersection areas in the historical translation process are recorded. A maximum intersection area is selected from the intersection areas. The translation parameter corresponding to the maximum intersection area is used as the first translation parameter.

Optionally, in order to ensure the accuracy of the first translation parameter, the specified distance may be selected as a unit distance. That is, the unit distance may be moved compared to the position before moving each time.

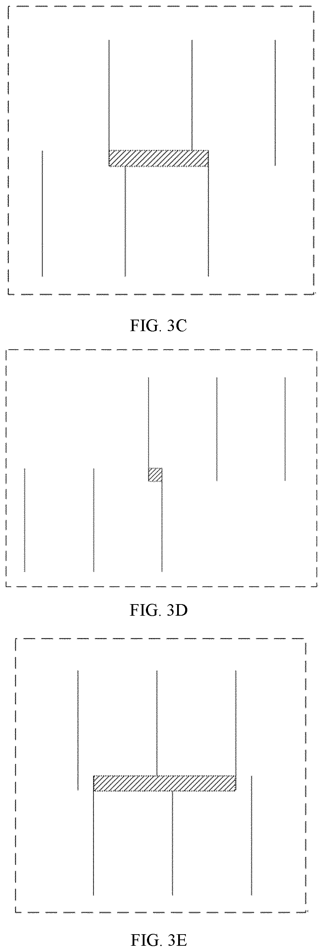

A process of determining the first translation parameter is illustrated below in conjunction with FIGS. 3C to 3F. In the example, the specified coordinate axis is the horizontal axis of the preset plane rectangular coordinate system. The specified direction is a positive direction and a negative direction of the horizontal axis, that is, a left direction and a right direction.

FIG. 3C is an example of positions of the first transformed marking set and the second transformed marking set before translation. An upper marking set is the first transformed marking set, and a lower marking set is the second transformed marking set. The position where the second transformed marking set is located in FIG. 3C is the initial position, and a shadow region in FIG. 3C is the initial intersection area.

In the example, a distance change (the specified distance) of each translation is a distance between two adjacent lane lines.

First, the translation process in which the first direction is the left direction is described.

On a basis of FIG. 3C, the second step is performed, the second transformed marking set is moved to left by the specified distance (a distance between two adjacent lane lines), to obtain a result shown in FIG. 3D. The area of the shadow region in FIG. 3D is the target intersection area of this translation. Since this translation is an initial translation in the first direction, the reference intersection area is the initial intersection area. Comparing shadow regions of FIG. 3C and FIG. 3D, it can be seen that the target intersection area of this translation is less than the reference intersection area. Accordingly, the fifth step may be performed to stop translating the second transformed marking set to the left. At this point, the translation of the second transformed marking set is ended in the left direction.

The translation process in which the second direction is the right direction is described below.

On the basis of FIG. 3C, the second step is performed, and the second transformed marking set is moved to right by the specified distance (the distance between two adjacent lane lines) to obtain the result shown in FIG. 3E. The area of the shadow region in FIG. 3E is the target intersection area of this translation, and since this translation is an initial translation in the second direction, the reference intersection area is the initial intersection area. Comparing the shadow regions of FIG. 3C and FIG. 3E, it can be seen that the target intersection area of this translation is greater than the reference intersection area. Therefore, it is necessary to perform the second step again, that is, to continue to translate the second transformed marking set to the right.

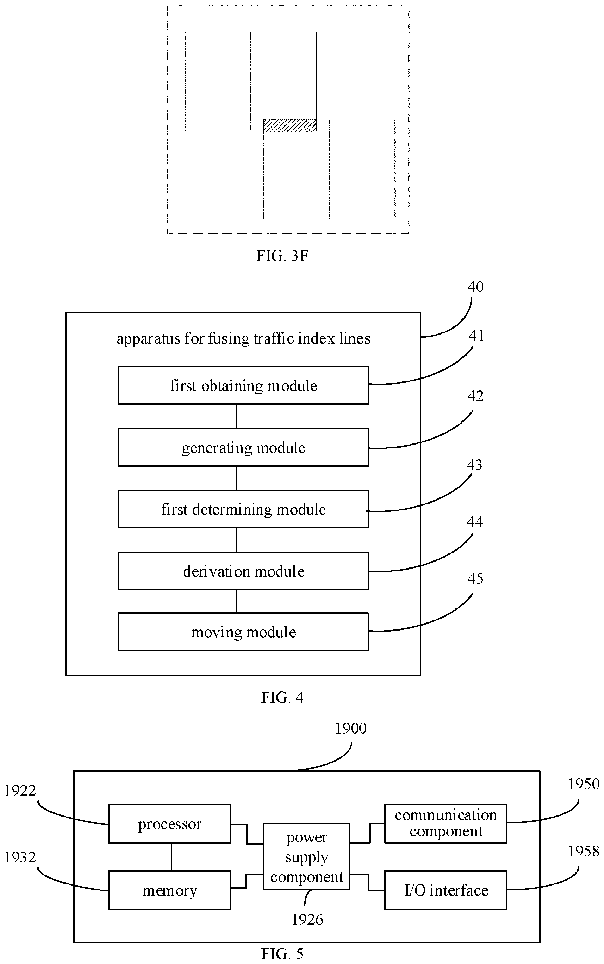

That is, on the basis of FIG. 3E, the second step is performed again, and the second transformed marking set is moved to the right by the specified distance (the distance between two adjacent lane lines) to obtain an effect shown in FIG. 3F. The area of the shadow region in FIG. 3F is the target intersection area of this translation. Since this translation is not the first translation in the second direction, the reference intersection area of this translation is the intersection area of the second bounding rectangle of the second transformed marking set before this translation and the first bounding rectangle, that is, the area of the shadow region in FIG. 3E. Comparing the shadow regions of FIG. 3E and FIG. 3F, it can be seen that the target intersection area of this translation is less than the reference intersection area. Therefore, the fifth step may be performed to stop translating the second transformed marking set to the right. At this point, the translation of the second transformed marking set is ended in the right direction.

After the translations in the left and right directions are ended, the execution condition of the sixth step is satisfied. Therefore, the translation parameter of the intermediate position relative to the initial position is used as the first translation parameter, in which the intersection area of the second bounding rectangle corresponding to the second transformed marking set at the intermediate position and the first bounding rectangle is the maximum intersection area in the historical translation process. In the example, a change parameter of a position of the second transformed marking set in FIG. 3E relative to that in FIG. 3C is the first translation parameter.

In the above process, since only a graphic movement in the direction parallel to the specified coordinate axis is involved, a calculation amount during the movement is very small, so that the efficiency of obtaining the first translation parameter can be effectively improved.

At the step 14, the second translation parameter is backcasted by using the first translation parameter based on the target transformation relationship.

After the first translation parameter is obtained, based on the target transformation relationship, the inverse process of obtaining the target transformation relationship is used to reversibly push out a translation parameter corresponding to the first translation parameter before transformation, that is, the second translation parameter. For example, if the target transformation relationship is obtained by the affine transformation, the second translation parameter can be obtained by an anti-affine transformation based on the first translation parameter. The second translation parameter is the translation parameter referenced by the actual movement of the marking set to be fused.

At the step 15, the marking set to be fused is moved by using the second translation parameter.

After the second translation parameter is obtained, the second translation parameter may be used to move the marking set to be fused, to make the marking set to be fused fuse with the target marking set, therefore a fused marking set is obtained.

According to the technical solution, a first local part overlapped with the marking set to be fused is obtained from the target marking set, a second local part overlapped with the target marking set is obtained from the marking set to be fused. Based on a target transformation relationship, a first transformed marking set is obtained after transformation of the first local part, a second transformed marking set is obtained after transformation of the second local part. A first translation parameter capable of fusing the second transformed marking set with the first transformed marking set is determined. A second translation parameter is derived by using the first translation parameter based on the target transformation relationship. The marking set to be fused is moved by using the second translation parameter. In this way, in a process of fusing the traffic markings, only a simple calculation mode needs to be used, which is beneficial to improve a fusion efficiency and accuracy.

FIG. 4 is a block diagram of an apparatus for fusing traffic markings according to an embodiment of the present disclosure. As illustrated in FIG. 4, the apparatus 40 includes a first obtaining module 41, a generating module 42, a first determining module 43, a derivation module 44, and a moving module 45.

The first obtaining module 41 is configured to obtain a first local part overlapped with a marking set to be fused from a target marking set and a second local part overlapped with the target marking set from the marking set to be fused.

The generating module 42 is configured to, based on a target transformation relationship, generate a first transformed marking set transformed from the first local part and a second transformed marking set transformed from the second local part.

The first determining module 43 is configured to determine a first translation parameter capable of fusing the second transformed marking set with the first transformed marking set.

The derivation module 44 is configured to backcast a second translation parameter by using the first translation parameter based on the target transformation relationship.

The moving module 45 is configured to move the marking set to be fused by using the second translation parameter.

Optionally, the apparatus 40 further includes a second determining module.

The second determining module is configured to for a given target marking set, determine the marking set to be fused corresponding to the target marking set. The target marking set and the marking set to be fused are both taken from marking sets of road data, and each marking set includes a group of the traffic markings.

Optionally, the second determining module is configured to determine a marking set whose occupied area overlaps with an area occupied by the target marking set based on the area occupied by the target marking set from the road data as the marking set to be fused.

Optionally, the apparatus 40 further includes a second obtaining module, a third determining module and a deleting module.

The second obtaining module is configured to obtain a first number of the target markings in the target marking set and a second number of the target markings in the marking set to be fused, before obtaining the first local part overlapped with the marking set to be fused from the target marking set and the second local part overlapped with the target marking set from the marking set to be fused.

The third determining module is configured to determine a smaller one of the first number and the second number as a target number, in response the first number being inconsistent with the second number.

The deleting module is configured to delete a traffic marking from the target marking set or the marking set to be fused, to enable a number of the traffic markings in the target marking set and a number of the traffic markings in the marking set to be fused to be the target number.

Optionally, the deleting module includes a first determining submodule, a second determining submodule, a third determining submodule, and a deleting submodule.

The first determining submodule is configured to determine a first distance between a traffic marking at a first side edge of the target marking set and a traffic marking at the first side edge of the marking set to be fused.

The second determining submodule is configured to determine a second distance between a traffic marking at a second side edge of the target marking set and a traffic marking at the second side edge of the marking set to be fused.

The third determining submodule is configured to take one side corresponding to a larger one of the first distance and the second distance as a target side.

The deleting submodule is configured to delete the traffic marking at the target side from the target marking set or the marking set to be fused.

Optionally, the deleting submodule is configured to:
if the first number is greater than the second number, delete a specified number of the traffic markings at the target side from the target marking set; and
if the second number is greater than the first number, delete a specified number of the traffic markings at the target side from the marking set to be fused.

The specified number is a difference between the first number and the second number.

Optionally, the target transformation relationship enables the second local part after transformation to be perpendicular to a specified coordinate axis.

Optionally, the target transformation relationship is obtained through an affine transformation.

Optionally, the first determining module 43 includes a fourth determining submodule and a fifth determining submodule.

The fourth determining submodule is configured to determine a first bounding rectangle corresponding to the first transformed marking set.

The fifth determining submodule is configured to perform a plurality of translation operations on the second transformed marking set, record the intersection area of a second bounding rectangle corresponding to the second transformed marking set and the first bounding rectangle in each translation, and take a translation parameter corresponding to a translation with a maximum intersection area as the first translation parameter.

Optionally, the fifth determining submodule is configured to:
record an initial position of the second transformed marking set without being subject to any translation, and determine the intersection area of the second bounding rectangle corresponding to the second transformed marking set at the initial position and the first bounding rectangle as an initial intersection area;
translate the second transformed marking set in a specified direction by a specified distance, to make the second transformed marking set reach a target position of this translation;
determine the intersection area of the second bounding rectangle corresponding to the second transformed marking set at the target position and the first bounding rectangle as a target intersection area;
compare the target intersection area with a reference intersection area;
if the target intersection area is less than the reference intersection area, stop translating the second transformed marking set in the specified direction;
after a translation operation on the second transformed marking set is stopped, take a translation parameter of an intermediate position relative to the initial position as the first translation parameter, in which the intersection area of the second bounding rectangle corresponding to the second transformed marking set at the intermediate position and the first bounding rectangle is maximum in a historical translation process.

Optionally, the fifth determining submodule is configured to:
return to the step of translating the second transformed marking set in a specified direction by a specified distance, to make the second transformed marking set reach a target position of this translation, in response to the target intersection area being larger than the reference intersection area.

Optionally, the specified direction is a direction parallel to the specified coordinate axis, and the specified direction includes a first direction and a second direction are opposite to each other.

Optionally, traffic markings are lane lines.

With regard to the apparatus in the above embodiments, the specific way in which each module performs the operation has been described in detail in the embodiments of the method and will not be elaborated here.

FIG. 5 is a block diagram illustrating an electronic device 1900 according to an example embodiment. For example, the electronic device 1900 may be provided as a server. Referring to FIG. 5, the electronic device 1900 includes one or more processors 1922, and a memory 1932 configured to store a computer program executable by the processor 1922. The computer program stored in the memory 1932 may include one or more modules each of which corresponds to a set of instructions. In addition, the processor 1922 is configured to execute the computer program, to execute the above methods for fusing traffic markings.

In addition, the electronic device 1900 may further include a power supply component 1926 and a communication component 1950. The power supply component 1926 may be configured to perform power management of the electronic device 1900. The communication component 1950 may be configured to implement communications of the electronic device 1900, for example, wired or wireless communication. In addition, the electronic device 1900 may further include an input/output (I/O) interface 1958. The apparatus 1900 may operate an operating system stored in the memory 1932, for example, Windows Server^{™}, Mac OS X^{™}, Unix^{™}, Linux^{™}, FreeBSD^{™}, etc.

In another example embodiment, a computer-readable storage medium including program instructions is further provided, and when the program instructions are executed by the processor, the steps of the above-mentioned method for fusing traffic markings are implemented. For example, the computer-readable storage medium may be the above-mentioned memory 1932 including the program instructions, and the program instructions may be executed by the processor 1922 of the electronic device 1900 to execute the above-mentioned method for fusing traffic markings.

In another exemplary embodiment, a computer program product is further provided. The computer program product includes computer programs that may be executed by a programmable apparatus, and the computer program possesses a code part configured to execute the above method for fusing traffic markings when executed by the programmable apparatus.

The embodiments of the present disclosure are described in detail above with reference to the accompanying drawings. However, the present disclosure is not limited to the specific details of the above-mentioned embodiments, and various simple modifications can be made to the embodiments of the present disclosure within the technical concept of the present disclosure, which also belong to the protection scope of the present disclosure.

In addition, it should be noted that various specific technical features described in the above-mentioned embodiments can be combined in any suitable manner if not contradictory. In order to avoid unnecessary repetition, various possible combinations will not be elaborated herein.

In addition, various embodiments of the present disclosure can also be combined arbitrarily, as long as they do not violate the spirit of the present disclosure, and they should also be regarded as the contents disclosed in the present disclosure.

## Claims

1. A method for fusing traffic markings, comprising:
obtaining a first local part overlapped with a marking set to be fused from a target marking set and a second local part overlapped with the target marking set from the marking set to be fused;
based on a target transformation relationship, generating a first transformed marking set transformed from the first local part and a second transformed marking set transformed from the second local part;
determining a first translation parameter capable of fusing the second transformed marking set with the first transformed marking set;
backcasting a second translation parameter by using the first translation parameter based on the target transformation relationship; and
moving the marking set to be fused by using the second translation parameter.

2. The method of claim 1, further comprising:
for a given target marking set, determining the marking set to be fused corresponding to the target marking set, wherein the target marking set and the marking set to be fused are both taken from marking sets of road data, and each marking set includes a group of the traffic markings.

3. The method of claim 2, wherein determining the marking set to be fused corresponding to the target marking set comprises:
based on an area occupied by the target marking set, determining a marking set whose occupied area overlaps with the area occupied by the target marking set from the road data as the marking set to be fused.

4. The method of claim 1, wherein before obtaining the first local part overlapped with the marking set to be fused from the target marking set and the second local part overlapped with the target marking set from the marking set to be fused, the method further comprises:
determining a first number of traffic markings in the target marking set and a second number of traffic markings in the marking set to be fused;
in response to the first number being inconsistent with the second number, determining a smaller one of the first number and the second number as a target number; and
deleting a traffic marking from the target marking set or the marking set to be fused, to enable a number of the traffic markings in the target marking set and a number of the traffic markings in the marking set to be fused to be the target number.

5. The method of claim 4, wherein deleting the traffic marking from the target marking set or the marking set to be fused, to enable the number of the traffic markings in the target marking set and the number of the traffic markings in the marking set to be fused to be the target number comprises:
determining a first distance between a traffic marking at a first side edge of the target marking set and a traffic marking at the first side edge of the marking set to be fused;
determining a second distance between a traffic marking at a second side edge of the target marking set and a traffic marking at the second side edge of the marking set to be fused;
taking one side corresponding to a larger one of the first distance and the second distance as a target side; and
deleting the traffic marking at the target side from the target marking set or the marking set to be fused.

6. The method of claim 5, wherein deleting the traffic marking at the target side from the target marking set or the marking set to be fused comprises:
in response to the first number being greater than the second number, deleting a specified number of traffic markings at the target side from the target marking set; and
in response to the second number being greater than the first number, deleting a specified number of traffic markings at the target side from the marking set to be fused;
wherein the specified number is a difference between the first number and the second number.

7. The method of claim 1, wherein the target transformation relationship enables the second local part after transformation to be perpendicular to a specified coordinate axis.

8. The method of claim 7, wherein the target transformation relationship is obtained by an affine transformation.

9. The method of claim 1, wherein determining the first translation parameter capable of fusing the second transformed marking set with the first transformed marking set comprises:
determining a first bounding rectangle corresponding to the first transformed marking set; and
performing a plurality of translation operations on the second transformed marking set, recording an intersection area of a second bounding rectangle corresponding to the second transformed marking set and the first bounding rectangle in each translation, and taking a translation parameter corresponding to a translation with a maximum intersection area as the first translation parameter.

10. The method of claim 9, wherein performing the plurality of translation operations on the second transformed marking set, recording the intersection area of the second bounding rectangle corresponding to the second transformed marking set and the first bounding rectangle in each translation, and taking the translation parameter corresponding to the translation with the maximum intersection area as the first translation parameter comprises:
recording an initial position of the second transformed marking set without being subject to any translation, and determining the intersection area of the second bounding rectangle corresponding to the second transformed marking set at the initial position and the first bounding rectangle as an initial intersection area;
translating the second transformed marking set in a specified direction by a specified distance, to make the second transformed marking set reach a target position of this translation;
determining the intersection area of the second bounding rectangle corresponding to the second transformed marking set at the target position and the first bounding rectangle as a target intersection area;
comparing the target intersection area with a reference intersection area;
in response to the target intersection area being less than the reference intersection area, stopping translating the second transformed marking set in the specified direction; and
after a translation operation on the second transformed marking set is stopped, taking a translation parameter of an intermediate position relative to the initial position as the first translation parameter, wherein the intersection area of the second bounding rectangle corresponding to the second transformed marking set at the intermediate position and the first bounding rectangle is maximum in a historical translation process.

11. The method of claim 10, further comprising:
in response to the target intersection area being larger than the reference intersection area, returning to the step of translating the second transformed marking set in the specified direction by the specified distance, to make the second transformed marking set reach the target position of this translation.

12. The method of claim 10, wherein the specified direction is a direction parallel to a specified coordinate axis, and the specified direction includes a first direction and a second direction which are opposite to each other.

13. The method of any of claim 1 to 12, wherein the traffic markings are lane lines.

14. An apparatus for fusing traffic markings, comprising:
a first obtaining module, configured to obtain a first local part overlapped with a marking set to be fused from a target marking set and a second local part overlapped with the target marking set from the marking set to be fused;
a generating module, configured to, based on a target transformation relationship, generate a first transformed marking set transformed from the first local part and a second transformed marking set transformed from the second local part;
a first determining module, configured to determine a first translation parameter capable of fusing the second transformed marking set with the first transformed marking set;
a derivation module, configured to backcast a second translation parameter by using the first translation parameter based on the target transformation relationship; and
a moving module, configured to move the marking set to be fused by using the second translation parameter.

15. A computer readable storage medium storing a computer program, wherein, the program is executed by a processor to perform the followings:
obtaining a first local part overlapped with a marking set to be fused from a target marking set and a second local part overlapped with the target marking set from the marking set to be fused;
based on a target transformation relationship, generating a first transformed marking set transformed from the first local part and a second transformed marking set transformed from the second local part;
determining a first translation parameter capable of fusing the second transformed marking set with the first transformed marking set;
backcasting a second translation parameter by using the first translation parameter based on the target transformation relationship; and
moving the marking set to be fused by using the second translation parameter.

16. An electronic device, comprising:
a memory with a computer program stored thereon; and
a processor, configured to execute the computer program in the memory to perform:
obtaining a first local part overlapped with a marking set to be fused from a target marking set and a second local part overlapped with the target marking set from the marking set to be fused;
based on a target transformation relationship, generating a first transformed marking set transformed from the first local part and a second transformed marking set transformed from the second local part;
determining a first translation parameter capable of fusing the second transformed marking set with the first transformed marking set;
backcasting a second translation parameter by using the first translation parameter based on the target transformation relationship; and
moving the marking set to be fused by using the second translation parameter.

17. A computer program product, comprising instructions, wherein when the instructions are executed by a processor of an electronic device, the electronic device is caused to perform:
obtaining a first local part overlapped with a marking set to be fused from a target marking set and a second local part overlapped with the target marking set from the marking set to be fused;
based on a target transformation relationship, generating a first transformed marking set transformed from the first local part and a second transformed marking set transformed from the second local part;
determining a first translation parameter capable of fusing the second transformed marking set with the first transformed marking set;
backcasting a second translation parameter by using the first translation parameter based on the target transformation relationship; and
moving the marking set to be fused by using the second translation parameter.
